# EUROPEAN PATENT SPECIFICATION

(11) **EP 1 854 197 B1**
(45) Date of publication and mention of the grant of the patent: **01.10.2008**
(21) Application number: 06723044.1
(22) Date of filing: 15.02.2006
(51) Int. Cl.: H02J 13/00

(54) **WIRELESS ELECTRONIC DEVICE FOR AUTOMATIC CONNECTION AND DISCONNECTION OF AN ELECTRIC POWER AND RESPECTIVE METHOD**
DRAHTLOSES ELEKTRONISCHES GERÄT ZUM AUTOMATISCHEN VERBINDEN UND TRENNEN EINER ELEKTRISCHEN STROMVERSORGUNG UND DIESBEZÜGLICHES VERFAHREN
DISPOSITIF ELECTRONIQUE SANS FIL DESTINE A DES CONNEXION ET DECONNEXION AUTOMATIQUES D'UNE ALIMENTATION ELECTRIQUE ET PROCEDE ASSOCIE

(30) Priority: 20.02.2005 WO PCT/SA2005/260021
(43) Date of publication of application: 14.11.2007
(73) Proprietor: Alomar, Abduh Mohammed Zailai, Jazan (SA)
(72) Inventor: Alomar, Abduh Mohammed Zailai, Jazan (SA)
(74) Representative: Fleuchaus, Michael A.
(86) International application number: PCT/EP2006/001365
(87) International publication number: WO 2006/087181

(56) References cited:
- WO-A-02/065673
- DE-A1- 4 301 799

## Description

### Invention Background

This invention comprises a wireless device, causing electric current to be (temporarily) disconnected from a location when the user leaves, and to be (re-)connected when the user accesses or approaches the location and a method thereof.

Hotels will be used as an example for explanation; however, the invention can be applied in any similar situation that necessitates the automatic connection of electric current to a location in the presence and automatic disconnection of electric current in the absence of the user.

Owners of hotels, furnished apartments, motels, offices and the like suffer from expensive electricity bills because residents or tenants do not switch off electric current upon leaving the location. For all rooms, hotels and the like thus deliberately use certain devices that need inserting an electronic access card (used as a key for accessing the room) to connect electric current, then disconnect the electric current when the card is taken out when the resident leaves the room. However, this method suits only hotels that had replaced the standard key system with electronic access cards. This method has two problems. First, the resident may forget the card inside the device before he leaves because it is not in front of his eyes. Second, any card with the same thickness will do the same job, such as ID cards or credit cards and the like, rendering this method useless. The reason why any card inserted in the device can connect electric current is that this method is mechanical and depends upon a little wheel fixed inside the device that needs to be moved a distance equal to the thickness of the card to connect electric current. And in the absence of any electronic signal from the card inserted in the device, this mechanical method becomes effective and connects electric current by inserting any card, which means that the high cost of electricity bills still remains.

The problem is not only the high cost of electricity bill, but also the consequent inappropriate power dissipation and increased environmental pollution.

A prior art solution which employs a receiver and a fixed transmitter is shown in WO 02/065673.

### General Description of Invention

The invention is set forth in claim 1.

The invention comprises two main parts: a transmitter and a receiver of wireless signals common between them identified by an encryptor (encoder) inside the transmitter and a decryptor (decoder) inside the receiver. The transmitter is powered by a rechargeable batter or an ordinary battery (lithium or the like) or any other power source, and the receiver is fixed to the main power box at the location on the main feed line, and its main function is to cause electric current to be disconnected from the location by blocking (e.g. using a circuit breaker) the main feed line that feeds electricity to the location.

The transmitter periodically (e.g. every 3 minutes) sends wireless signals, such as pulse signals, encoded with a specific ID for the intended receiver. When the transmitter is located within the reception range of the receiver, the receiver receives the signals and causes electric power to be connected (e.g. using a circuit breaker connected to the main feed line) to supply the location with electricity after identifying the transmitter ID. The receiver maintains the connection closed for a period of e.g. 5 minutes. This first time period is renewable, meaning that if within said period another such signal is received from the transmitter the connection is maintained for another period. This first period is longer than the second time period, i.e. the intervals at which the transmitter sends a signal, to ensure that a continuous supply of electric power is maintained at the location, while the transmitter is in the reception range. The delay in the receiver (i.e., the first time period) in (re-)opening the connection is controlled by means of a delay circuit and a timer that are preprogrammed for the time period during which the connection is to be kept closed.

Each transmitter and receiver holds a specific, mutually matching wireless signal identifier, and this identifier changes upon changing the transmitter and receiver to guarantee that wireless signals do not interfere in between adjacent locations.

Since the transmitter sends its signal periodically - to save battery power - the resident or user of the intended location can possibly reach the reception range of the receiver during a period within which the last emitted signal by the transmitter did not reach the receiver. To overcome this problem, the transmitter is equipped with a reset means, such as a button, that causes an immediate wireless signal to be sent to the receiver to connect the electric current. The transmitter further comprises a wireless signal transmission timer, which starts automatically from the instant the means is actuated, i.e. the button is pressed; i.e. the transmitter is reset using the aforementioned button.

Also, the transmitter is designed not to send any signals while being charged (if powered by a rechargeable battery), and / or while a transmitter on/off switch is set accordingly, i.e. to disconnect power from the battery or power source if not rechargeable.

### Brief Explanation of Figure

Figure (1) is a general diagram of the receiver connected to the main power box.
Figure (2a) is a general diagram of the transmitter attached to a key holder.
Figure (2b) is a general diagram of a compact transmitter attached to the key.
Figure (3) is a schematic diagram of the transmitter circuit.
Figure (4) is a schematic diagram of the receiver circuit.

### Detailed Description

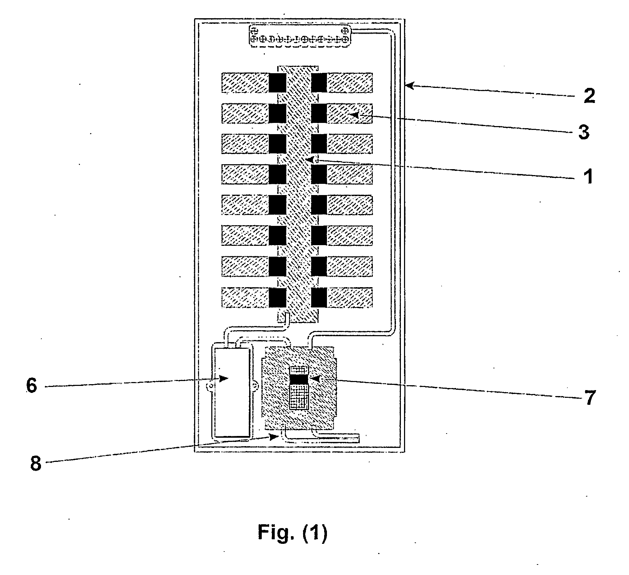

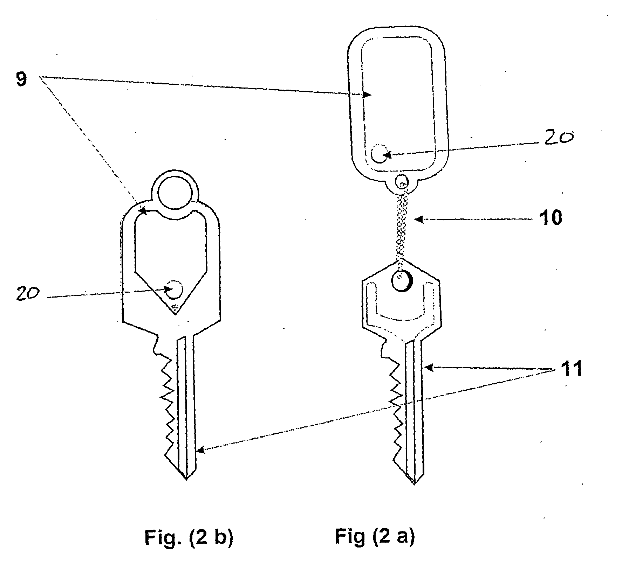

With reference to figures 1, 2a, and 2b, the present invention comprises two main parts, a transmitter (9) and a receiver (6) of a specific common signal between them. The receiver (6) is coupled to a main circuit breaker (7), which in turn is connected to the main feed line (1). The main circuit breaker is controlled by the receiver to either connect (circuit breaker closed) or disconnect (circuit breaker open) the location to / from the main feed line. All or some of the electrical appliances and apparatuses within the location are connected to the main feed line via sub-circuit breakers (3). If some of the appliances are to remain in operation even when electric current is disconnected by opening the main circuit breaker (e.g. refrigerator, TV, fan, air conditioning, etc.), this can be achieved by providing an additional feed line (not shown), which e.g. branches off from the main feed line before the receiver-controlled main circuit breaker (i.e. is unaffected by operation of the main circuit breaker).

The transmitter (9) is attached to a key (11), either via a key holder (10), as shown in Fig. 2a, or by direct attachment to or incorporation into the key (Fig. 2b). The transmitter may also take any other appropriate form, such as that of a separate access card.

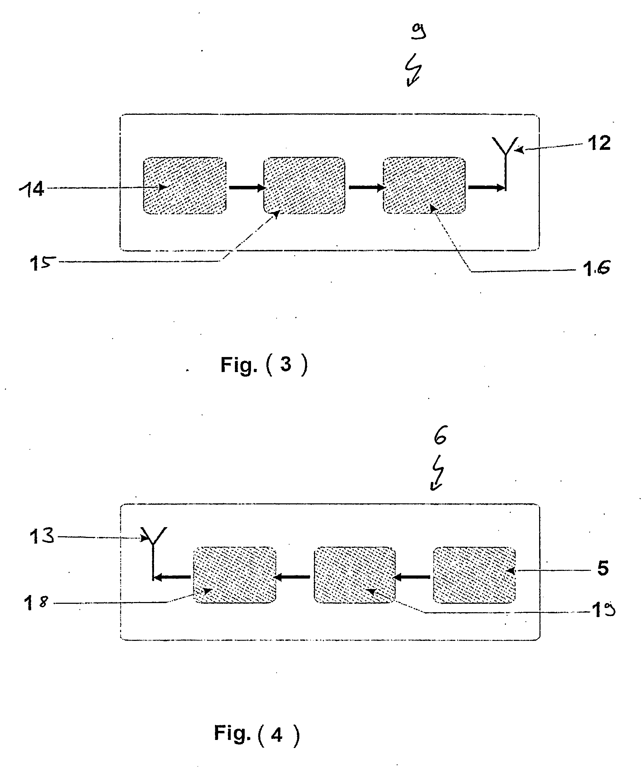

With reference to figures 3 and 4, in normal mode, the transmitter sends electrical pulses in a wireless manner generated by the pulse generator (14) which are encrypted (encoded) by the encryptor (encoder) (15) to be subsequently transmitted by the pulse transmitter module (16) via the antenna (12) to the receiver (6). The pulse receiver module (18) located in the receiver (6) receives the signal from the transmitter (9) via the antenna (13) and sends it to the pulse decoder (decryptor) (19) that identifies the transmitter ID. The decoder passes the signal - after transmitter ID verification - to the receiver timer (17) (not shown) to reset the timing for closing the main circuit breaker to the first time period and then to the delay circuit that delays the response to the main circuit breaker to open the main circuit breaker until the first time period will have elapsed, or until another signal is received from the transmitter (9), whereupon the receiver timer (17) located in the receiver (6) is reset.

If the transmitter (9) is in the wireless signal reception range of the receiver (6), the receiver (6) receives a wireless signal sent by the transmitter (9) at predefined, but programmable, time intervals (corresponding to the second time period), of e.g. three minutes, and the receiver (6) causes electric current to be connected, i.e. the main circuit breaker to be closed, via the timer (17) and the delay (5) for a redefined, but programmable, first time period (e.g. for five minutes). It is important to note that the first time period has to be longer than the second time period to avoid unwanted power cuts, in other words to ensure a continual supply of electric power to the location as long as the transmitter (9) and the receiver (6) are in the same broadcasting range i.e. the user is present at or near the location to be supplied. _

The main feed line continuously supplies the receiver (6) and the power storage (batteries) provides the transmitter (9) with the power it needs to operate. It is preferable to use a rechargeable power source for the transmitter (9) whereas the transmitter turns off completely when connected to the charger. The transmitter can be provided with an on/off switch if operated by a non rechargeable power source so as to save its power and lengthen its lifetime.

Furthermore, the transmitter comprises a reset button (20) that is used to connect electric current directly and reset the receiver timer. Upon approaching or accessing the location, and in the absence of electric current, the user can press this reset button (20) to immediately send the wireless signal to the receiver (6) to reconnect the electric current without having to wait for the second time period to elapse.

It is well known that the invention - especially the transmitter (9) - can be implemented in different ways other than the one specified in the aforementioned description, and may be manufactured from different materials. Also the transmitter and receiver circuits may be changed by some add-ins that may improve efficiency and save power.

## Claims

1. Wireless electronic device for automatic connection and disconnection of an electric power supplied to a location, comprising a transmitter (9) and a receiver (6), wherein
- the receiver is coupled to a main circuit breaker (7) connected to the main feed line (1) of said location;
- the transmitter comprises an electric pulse generator (14), a pulse transmitter module (16) and a first antenna device (12) to wirelessly transmit pulse signals;
- the receiver comprises a second antenna device (13) to receive said pulse signals if the transmitter is within the reception range of the receiver;
- the receiver controls said circuit breaker (7) connected to said main feed line in that the receiver causes the circuit breaker to close, whereby electric power is supplied to the location, upon receipt of one of said pulse signals by the receiver, and in that the receiver causes the circuit breaker to open, whereby the electric power supply to the location is cut, upon failure to receive one of said pulse signals by the receiver for a first time period;
**characterized in that** the transmitter is mobile.

2. Wireless electronic device according to claim 1, wherein
the transmitter comprises an encoder (15) to encode pulses with the transmitter's characteristic identity; and wherein
the receiver comprises a decoder to decode and verify the transmitter's identity.

3. Wireless electronic device according to claim 2, wherein
the transmitter (9) and receiver (6) share the same cipher used for encoding/decoding, which is different from the cipher used in adjacent locations so as a guarantee absence of interference in between adjacent locations.

4. Wireless electronic device according to claims 1, 2 or 3, wherein
the transmitter (9) further comprises a transmitter timer (30) to cause the transmitter to periodically transmit a pulse signal after a programmable second time period.

5. Wireless electronic device according to claim 4, wherein
the receiver (6) further comprises a receiver timer (17) and a delay circuit (5) connected to the circuit breaker, which cause the circuit breaker to open upon failure to receive a pulse signal from the transmitter by the receiver for said first time period, which is programmable and longer than the second time period.

6. Wireless electronic device according to claims 1 to 5, wherein
the transmitter (9) further comprises a reset means (20) to initiate a pulse to be transmitted immediately by the transmitter, whereby the receiver timer (17) is reset.

7. Method for automatic connection and disconnection of the electric power supplied to a location, comprising the steps of
- wirelessly transmitting pulse signals by a mobile transmitter (9);
- receiving said wireless pulse signals by a receiver (6), coupled to a main circuit breaker (7) connected to the main feed line (1) of said location, if the transmitter is in the reception range of the receiver;
- causing said circuit breaker (7) to close, whereby electric power is supplied to the location, upon receipt of one of said pulse signals by the receiver, controlling said circuit breaker;
- causing the circuit breaker to open, whereby the electric power supply to the location is cut, upon failure to receive one of said pulse signals for a first time period.

8. Method according to method claim 7, further comprising the steps of
- encoding the pulse signals with the transmitter's characteristic identity on the transmitter side; and
- decoding and verifying the transmitter's identity on the receiver side.

9. Method according to method claims 7 or 8, further comprising the step of
using the same shared cipher for encoding in the transmitter (9) and decoding in the receiver (6), respectively, wherein the shared cipher used by the respective transmitter/receiver pair in a first location is different from the one used in an adjacent location, so as to guarantee absence of interference in between adjacent locations.

10. Method according to method claims 7, 8 or 9, further comprising the step of
using a transmitter timer (30) in the transmitter (9) to cause the transmitter to periodically transmit said pulse signal after a programmable second time period.

11. Method according to method claims 7 to 10, further comprising the step of
using a receiver timer (17) and a delay circuit (5) connected to the circuit breaker (7), to cause the circuit breaker to open upon failure to receive pulse signals from the transmitter by the receiver for the first time period which is programmable and longer than the second time period.

12. Method according to method claims 7 to 11, further comprising the step of
initiating a pulse signal to be transmitted immediately by the transmitter upon actuation of a reset means (20), whereby the receiver timer (17) is reset.

13. System comprising at least two wireless electronic devices according to either of claims 1 to 6, wherein
a first wireless electronic device is used in a first location comprising a transmitter (9) and a receiver (6), sharing a first cipher for encoding/decoding; and
a second wireless electronic device is used in a second location, adjacent to the first, further comprising a transmitter (9') and a receiver (6'), sharing a second cipher for encoding/decoding, which is different from the first cipher.

## Patentansprüche

1. Drahtlose elektronische Vorrichtung zum automatischen Verbinden und Trennen einer einem Standort zugeführten elektrischen Leistung, umfassend einen Sender (9) und einen Empfänger (6), wobei
- der Empfänger an einen mit der Hauptzufuhrleitung (1) des Standortes verbundenen Hauptstromkreisunterbrecher (7) gekoppelt ist;
- der Sender einen elektrischen Impulsgenerator (14), ein Impulssendermodul (16) und eine erste Antennenvorrichtung (12) zum drahtlosen Übertragen von Impulssignalen umfasst;
- der Empfänger eine zweite Antennenvorrichtung (13) zum Empfangen der Impulssignale, wenn sich der Sender innerhalb des Empfangsbereiches des Empfängers befindet, umfasst;
- der Empfänger den mit der Hauptzufuhrleitung verbundenen Stromkreisunterbrecher (7) in der Weise steuert, dass der Empfänger bei Empfang eines der Impulssignale durch den Empfänger ein Schließen des Stromkreisunterbrechers bewirkt, wodurch dem Standort elektrische Leistung zugeführt wird, und in der Weise, dass der Empfänger bei Nichtempfang eines der Impulssignale durch den Empfänger für einen ersten Zeitraum ein Öffnen des Stromkreisunterbrechers bewirkt, wodurch die Zufuhr elektrischer Leistung zu dem Standort unterbrochen wird;
**dadurch gekennzeichnet, dass** der Sender mobil ist.

2. Drahtlose elektronische Vorrichtung gemäß Anspruch 1, wobei
der Sender einen Kodierer (15) zum Kodieren von Impulsen mit der charakteristischen Identität des Senders umfasst und wobei
der Empfänger einen Dekodierer zum Dekodieren und Verifizieren der Identität des Senders umfasst.

3. Drahtlose elektronische Vorrichtung gemäß Anspruch 2, wobei
der Sender (9) und der Empfänger (6) denselben zum Kodieren/Dekodieren verwendeten Schlüssel gemeinsam verwenden, welcher sich von dem an angrenzenden Standorten verwendeten Schlüssel unterscheidet, um das Nichtvorhandensein von Interferenz zwischen angrenzenden Standorten zu gewährleisten.

4. Drahtlose elektronische Vorrichtung gemäß Ansprüchen 1, 2 oder 3, wobei
der Sender (9) weiterhin einen Sender-Zeitgeber (30) umfasst, um zu bewirken, dass der Sender periodisch nach einem programmierbaren zweiten Zeitraum ein Impulssignal sendet.

5. Drahtlose elektronische Vorrichtung gemäß Anspruch 4, wobei
der Empfänger (6) weiterhin einen Empfänger-Zeitgeber (17) und eine Verzögerungsschaltung (5), verbunden mit dem Stromkreisunterbrecher, umfasst, welche bei Nichtempfang eines Impulssignals von dem Sender durch den Empfänger für den ersten Zeitraum, der programmierbar und länger als der zweite Zeitraum ist, ein Öffnen des Stromkreisunterbrechers bewirken.

6. Drahtlose elektronische Vorrichtung gemäß Ansprüchen 1 bis 5, wobei
der Sender (9) weiterhin ein Rücksetzmittel (20) umfasst, um zu veranlassen, dass durch den Sender unmittelbar ein Impuls gesendet wird, wodurch der Empfänger-Zeitgeber (17) zurückgesetzt wird.

7. Verfahren zum automatischen Verbinden und Trennen der einem Standort zugeführten elektrischen Leistung, umfassend die Schritte
- drahtloses Senden von Impulssignalen durch einen mobilen Sender (9);
- Empfangen der drahtlosen Impulssignale durch einen Empfänger (6), gekoppelt an einen mit der Hauptzufuhrleitung (1) des Standortes verbundenen Hauptstromkreisunterbrecher (7), wenn sich der Sender im Empfangsbereich des Empfängers befindet;
- Bewirken eines Schließens des Stromkreisunterbrechers (7), wodurch dem Standort elektrische Leistung zugeführt wird, beim Empfang eines der Impulssignale durch den Empfänger, wodurch der Stromkreisunterbrecher gesteuert wird;
- Bewirken eines Öffnens des Stromkreisunterbrechers, wodurch die Zufuhr elektrischer Leistung zu dem Standort unterbrochen wird, bei Nichtempfang eines der Impulssignale für einen ersten Zeitraum.

8. Verfahren gemäß Verfahrensanspruch 7, weiterhin folgende Schritte umfassend:
- Kodieren der Impulssignale mit der charakteristischen Identität des Senders auf Senderseite und
- Dekodieren und Verifizieren der Identät des Senders auf Empfängerseite.

9. Verfahren gemäß Verfahrensansprüchen 7 oder 8, weiterhin den Schritt umfassend,
denselben gemeinsamen Schlüssel zum Kodieren in dem Sender (9) bzw. Dekodieren in dem Empfänger (6) zu verwenden, wobei der von dem jeweiligen Sender/Empfänger-Paar an einem ersten Standort verwendete gemeinsame Schlüssel sich von dem an einem angrenzenden Standort verwendeten unterscheidet, um das Nichtvorhandensein von Interferenz zwischen angrenzenden Standorten zu gewährleisten.

10. Verfahren gemäß Verfahrensansprüchen 7, 8 oder 9, weiterhin den Schritt umfassend, einen Sender-Zeitgeber (30) in dem Sender (9) zu verwenden, um zu bewirken, dass der Sender periodisch nach einem programmierbaren zweiten Zeitraum das Impulssignal sendet.

11. Verfahren gemäß Verfahrensansprüchen 7 bis 10, weiterhin den Schritt umfassend, einen Empfänger-Zeitgeber (17) und eine Verzögerungsschaltung (5), verbunden mit dem Stromkreisunterbrecher (7), zu verwenden, um ein Öffnen des Stromkreisunterbrechers bei Nichtempfang von Impulssignalen von dem Sender durch den Empfänger für den ersten Zeitraum zu bewirken, welcher programmierbar und länger als der zweite Zeitraum ist.

12. Verfahren gemäß Verfahrensansprüchen 7 bis 11, weiterhin den Schritt umfassend, zu veranlassen, dass durch den Sender bei Betätigung eines Rücksetzmittels (20) unmittelbar ein Impulssignal gesendet wird, wodurch der Empfänger-Zeitgeber (17) zurückgesetzt wird.

13. System, welches wenigstens zwei drahtlose elektronische Vorrichtungen gemäß einem der Ansprüche 1 bis 6 umfasst, wobei
eine erste drahtlose elektronische Vorrichtung an einem ersten Standort verwendet wird, umfassend einen Sender (9) und einen Empfänger (6), welche gemeinsam einen ersten Schlüssel zum Kodieren/Dekodieren verwenden; und
eine zweite drahtlose elektronische Vorrichtung an einem zweiten Standort, welcher an den ersten angrenzt, verwendet wird, weiterhin umfassend einen Sender (9') und einen Empfänger (6'), welche gemeinsam einen zweiten Schlüssel zum Kodieren/Dekodieren verwenden, der sich von dem ersten Schlüssel unterscheidet.

## Revendications

1. Appareil électronique sans fil pour connecter et déconnecter automatiquement une énergie électrique appliquée à un emplacement, comprenant un émetteur (9) et un récepteur (6), dans lequel
- le récepteur est couplé à un coupe-circuit (7) principal connecté à la ligne d'alimentation en énergie principale (1) dudit emplacement ;
- l'émetteur comprend un générateur d'impulsions électriques (14), un module émetteur d'impulsions (16) et un premier dispositif d'antenne (12) afin de transmettre sans fil des signaux d'impulsions ;
- le récepteur comprend un second dispositif d'antenne (13) afin de recevoir lesdits signaux d'impulsions si l'émetteur est à l'intérieur du champ de réception du récepteur ;
- le récepteur commande ledit coupe-circuit (7) connecté à ladite ligne d'alimentation en énergie principale en ce que le récepteur amène le coupe-circuit à se fermer, moyennant quoi l'emplacement est alimenté en énergie électrique, à la réception d'un desdits signaux d'impulsions par le récepteur, et en ce que le récepteur amène le coupe-circuit à s'ouvrir, moyennant quoi l'alimentation en énergie électrique de l'emplacement est coupée, en cas d'échec à recevoir un desdits signaux d'impulsions par le récepteur pendant une première période de temps ;
**caractérisé en ce que** l'émetteur est mobile.

2. Appareil électronique sans fil selon la revendication 1, dans lequel
l'émetteur comprend un codeur (15) afin de coder des impulsions avec l'identité caractéristique de l'émetteur ; et dans lequel
le récepteur comprend un décodeur afin de décoder et vérifier l'identité d'émetteur.

3. Appareil électronique sans fil selon la revendication 2, dans lequel
l'émetteur (9) et le récepteur (6) partagent le même chiffrement utilisé pour le codage/décodage, qui est différent du chiffrement utilisé en des emplacements voisins de manière à garantir une absence d'interférence entre des emplacements voisins.

4. Appareil électronique sans fil selon les revendications 1, 2 ou 3, dans lequel
l'émetteur (9) comprend en outre un minuteur d'émetteur (30) afin d'amener l'émetteur à transmettre périodiquement un signal d'impulsion après une seconde période de temps programmable.

5. Appareil électronique sans fil selon la revendication 4, dans lequel
le récepteur (6) comprend en outre un minuteur de récepteur (17) et un circuit de retardement (5) connectés au coupe-circuit, qui amènent le coupe-circuit à s'ouvrir en cas d'échec à recevoir un signal d'impulsion provenant de l'émetteur par le récepteur pendant ladite première période de temps, laquelle est programmable et plus longue que la seconde période de temps.

6. Appareil électronique sans fil selon les revendications 1 à 5, dans lequel
l'émetteur (9) comprend en outre un moyen de réinitialisation (20) pour initier la transmission immédiate d'une impulsion par l'émetteur, moyennant quoi le minuteur de récepteur (17) est réinitialisé.

7. Procédé de connexion et déconnexion automatique de l'énergie électrique fournie à un emplacement, comprenant les étapes consistant à :
- transmettre sans fil des signaux d'impulsions par un émetteur mobile (9) ;
- recevoir lesdits signaux d'impulsions sans fil par un récepteur (6), couplé à un coupe-circuit principal (7) connecté à la ligne d'alimentation en énergie principale (1) dudit emplacement, si l'émetteur est dans le champ de réception du récepteur ;
- amener ledit coupe-circuit (7) à se fermer, moyennant quoi l'emplacement est alimenté en énergie électrique, à la réception d'un desdits signaux d'impulsions par le récepteur, commandant ledit coupe-circuit ;
- amener le coupe-circuit à s'ouvrir, moyennant quoi l'alimentation en énergie électrique de l'emplacement est coupée, en cas d'échec à recevoir un desdits signaux d'impulsions pendant une première période de temps.

8. Procédé selon la revendication 7, comprenant en outre les étapes consistant à :
- coder les signaux d'impulsions avec l'identité caractéristique de l'émetteur du côté de l'émetteur ; et
- décoder et vérifier l'identité d'émetteur du côté du récepteur.

9. Procédé selon les revendications 7 ou 8, comprenant les étapes consistant à :
utiliser le même chiffrement partagé pour un codage dans l'émetteur (9) et un décodage dans le récepteur (6), respectivement, moyennant quoi le chiffrement partagé utilisé par la paire émetteur/récepteur respective en un premier emplacement est différent de celui utilisé en un emplacement voisin, de manière à garantir une absence d'interférence entre des emplacements voisins.

10. Procédé selon les revendications 7, 8 ou 9, comprenant en outre l'étape consistant à utiliser un minuteur d'émetteur (30) dans l'émetteur (9) afin d'amener l'émetteur à transmettre périodiquement ledit signal d'impulsion après une seconde période de temps programmable.

11. Procédé selon les revendications 7 à 10, comprenant en outre l'étape consistant à utiliser un minuteur de récepteur (17) et un circuit de retardement (5) connectés au coupe-circuit (7), afin d'amener le coupe-circuit à s'ouvrir en cas d'échec à recevoir des signaux d'impulsions provenant de l'émetteur par le récepteur pendant la première période de temps, laquelle est programmable et plus longue que la seconde période de temps.

12. Procédé selon les revendications 7 à 11, comprenant en outre l'étape consistant à initier la transmission immédiate par l'émetteur d'un signal d'impulsions lors de l'actionnement d'un moyen de réinitialisation (20), moyennant quoi le minuteur de récepteur (17) est réinitialisé.

13. Système comprenant au moins deux appareils électroniques sans fil selon l'une quelconque des revendications 1 à 6, dans lequel
un premier appareil électronique sans fil est utilisé en un premier emplacement comprenant un émetteur (9) et un récepteur (6), partageant un premier chiffrement pour le codage/décodage ; et
un second appareil électronique sans fil est utilisé en un second emplacement, voisin du premier, comprenant en outre un émetteur (9') et un récepteur (6'), partageant un second chiffrement pour le codage/décodage, qui est différent du premier chiffrement.
